# EUROPEAN PATENT APPLICATION

(11) **EP 3 235 712 A1**
(43) Date of publication of application: **25.10.2017**
(21) Application number: 17153896.0
(22) Date of filing: 31.01.2017
(51) Int. Cl.: B62L 3/08, B60T 8/26, B60T 8/32

(54) **VARIABLE LINKED BRAKING SYSTEM CONTROLLED BY MOTORCYCLE SPEED**

(30) Priority: 21.04.2016 TW 105112361
(71) Applicant: Motive Power Industry Co., Ltd., Dacun Township, Changhua County 515 (TW)
(72) Inventor: CHENG, Kai-Wen, 515 Dacun Township, (TW)
(74) Representative: Bonvicini, Davide

(57) **Abstract**

A variable linked braking system controlled by motorcycle speed includes a brake master cylinder; a hydraulic pressure proportion variable valve connected to the brake master cylinder by an oil path; front and rear brake units connected to the hydraulic pressure proportion variable valve by first and second oil paths, respectively; a hydraulic pressure proportion controller for controlling the hydraulic pressure proportion variable valve; a motorcycle speed sensor for converting a sensed motorcycle speed into a speed signal and sending the speed signal to the hydraulic pressure proportion controller; and a brake switch for starting the brake master cylinder and sending a brake signal to the hydraulic pressure proportion controller for controlling the hydraulic pressure distribution proportion of the hydraulic pressure proportion variable valve so that the ratio of braking force of the front brake unit to braking force of the rear brake unit increases with the motorcycle speed.

## Description

### FIELD OF THE INVENTION

The present invention relates to variable linked braking systems controlled by motorcycle speed and, more particularly, to a variable linked braking system controlled by motorcycle speed and adapted to enhance the stability of a motorcycle being braked.

### BACKGROUND OF THE INVENTION

Motorcycles, deemed an important means of transport in some countries, come with safety components, namely a front brake and a rear brake. In general, the front brake is controlled by the right brake handle, whereas the rear brake is controlled by the left brake handle. However, in case of emergency, the rider may not operate the right brake handle or left brake handle properly, and in consequence the motorcycle may fall over.

Therefore, it is important to provide a variable linked braking system controlled by motorcycle speed and adapted to enhance the stability of a motorcycle being braked.

### SUMMARY OF THE INVENTION

In view of the aforesaid drawbacks of the prior art, it is an objective of the present invention to provide a variable linked braking system controlled by motorcycle speed and adapted to enhance the stability of a motorcycle being braked.

In order to achieve the above and other objectives, the present invention provides a variable linked braking system controlled by motorcycle speed, comprising: a brake master cylinder; a hydraulic pressure proportion variable valve connected to the brake master cylinder by an oil path; a front brake unit connected to the hydraulic pressure proportion variable valve by a first oil path; a rear brake unit connected to the hydraulic pressure proportion variable valve by a second oil path; a hydraulic pressure proportion controller for controlling a hydraulic pressure distribution proportion of the hydraulic pressure proportion variable valve; a motorcycle speed sensor for sensing a motorcycle speed, converting the sensed motorcycle speed into a speed signal, and sending the speed signal to the hydraulic pressure proportion controller; and a brake switch for starting the brake master cylinder and sending a brake signal to the hydraulic pressure proportion controller to trigger the hydraulic pressure proportion controller to control a hydraulic pressure distribution proportion of the hydraulic pressure proportion variable valve, thereby allowing a ratio of a braking force of the front brake unit to a braking force of the rear brake unit to increase with the motorcycle speed.

Regarding the variable linked braking system controlled by motorcycle speed, the front brake unit is front brake calipers, and the rear brake unit is rear brake calipers.

Regarding the variable linked braking system controlled by motorcycle speed, the ratio increases with the motorcycle speed to therefore increase to less than 1, 1, or larger than 1.

Regarding the variable linked braking system controlled by motorcycle speed, the ratio increases with the motorcycle speed from 0/10 to 3/7 when the motorcycle speed increases from 0km/h to 30km/h, the ratio increases with the motorcycle speed to therefore increase from 0/10 to 4/6 when the motorcycle speed increases from 0km/h to 60km/h, the ratio increases with the motorcycle speed to therefore increase from 0/10 to 5/5 when the motorcycle speed increases from 0km/h to 90km/h, and the ratio increases with the motorcycle speed to therefore increase from 0/10 to 6/4 when the motorcycle speed increases from 0km/h to larger than 90km/h.

Regarding the variable linked braking system controlled by motorcycle speed, the ratio increases with the motorcycle speed to therefore increase from 5/5 to 6/4 when the motorcycle speed increases from 0km/h to 60km/h.

Regarding the variable linked braking system controlled by motorcycle speed, the ratio is 5/5 when the motorcycle speed equals 30km/h.

Regarding the variable linked braking system controlled by motorcycle speed, the ratio increases with the motorcycle speed to therefore increase from 5/5 to 7/3 when the motorcycle speed increases from 0km/h to at least 90km/h.

Regarding the variable linked braking system controlled by motorcycle speed, the ratio is 5/5 when the motorcycle speed equals 30km/h.

Regarding the variable linked braking system controlled by motorcycle speed, the ratio increases with the motorcycle speed continuously.

Regarding the variable linked braking system controlled by motorcycle speed, the ratio increases with the motorcycle speed stepwise.

The variable linked braking system controlled by motorcycle speed further comprises a motorcycle lean angle sensor for sensing a motorcycle lean angle, converting the sensed motorcycle lean angle into a lean angle signal, and sending the lean angle signal to the hydraulic pressure proportion controller, wherein the hydraulic pressure proportion controller controls a hydraulic pressure distribution proportion of the hydraulic pressure proportion variable valve when the brake switch starts the brake master cylinder and sends the brake signal to the hydraulic pressure proportion controller, and the ratio decreases from the ratio corresponding to the motorcycle speed as the motorcycle lean angle increases.

Regarding the variable linked braking system controlled by motorcycle speed, the ratio decreases from the ratio corresponding to the motorcycle speed to 0 or larger than 0 as the motorcycle lean angle increases.

Regarding the variable linked braking system controlled by motorcycle speed, the ratio decreases from the ratio corresponding to the motorcycle speed to one of 2/8 and 4/6 when the motorcycle lean angle increases from 0 degree to 10 degrees, the ratio decreases from the ratio corresponding to the motorcycle speed to one of 1/9 and 2/8 when the motorcycle lean angle increases from 0 degree to 20 degrees, and the ratio decreases from the ratio corresponding to the motorcycle speed to one of 0/10 and 1/9 when the motorcycle lean angle increases from 0 degree to 30 degrees.

Regarding the variable linked braking system controlled by motorcycle speed, the ratio decreases continuously from the ratio corresponding to the motorcycle speed as the motorcycle lean angle increases.

Regarding the variable linked braking system controlled by motorcycle speed, the ratio decreases stepwise from the ratio corresponding to the motorcycle speed as the motorcycle lean angle increases.

Hence, according to the present invention, the variable linked braking system controlled by motorcycle speed enhances the stability of the motorcycle being braked.

### BRIEF DESCRIPTION OF THE DRAWINGS

Objectives, features, and advantages of the present invention are hereunder illustrated with specific embodiments in conjunction with the accompanying drawings, in which:
FIG. 1 is a block diagram of a variable linked braking system controlled by motorcycle speed according to a preferred embodiment of the present invention;
FIG. 2A is the first graph of ratio versus motorcycle speed according to the preferred embodiment of the present invention;
FIG. 2B is the second graph of ratio versus motorcycle speed according to the preferred embodiment of the present invention;
FIG. 3A is the third graph of ratio versus motorcycle speed according to the preferred embodiment of the present invention;
FIG. 3B is the fourth graph of ratio versus motorcycle speed according to the preferred embodiment of the present invention;
FIG. 4 is a schematic view of the motorcycle lean angle according to the preferred embodiment of the present invention;
FIG. 5A is the first graph of the ratio versus motorcycle lean angle according to the preferred embodiment of the present invention;
FIG. 5B is the second graph of the ratio versus motorcycle lean angle according to the preferred embodiment of the present invention;
FIG. 6A is the third graph of the ratio versus motorcycle lean angle according to the preferred embodiment of the present invention; and
FIG. 6B is the fourth graph of the ratio versus motorcycle lean angle according to the preferred embodiment of the present invention.

### DETAILED DESCRIPTION OF THE PREFERRED EMBODIMENTS

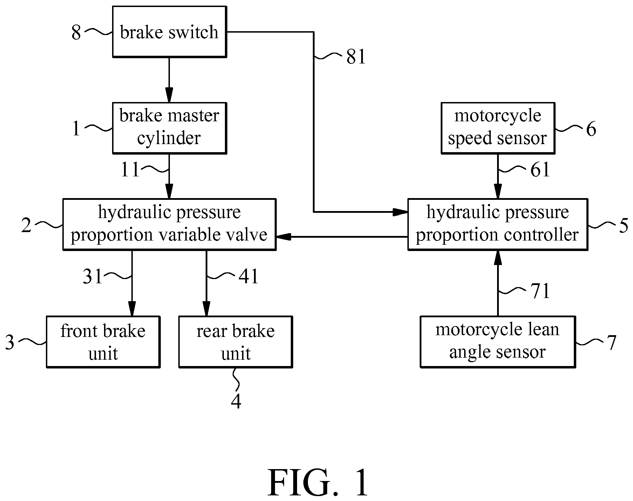

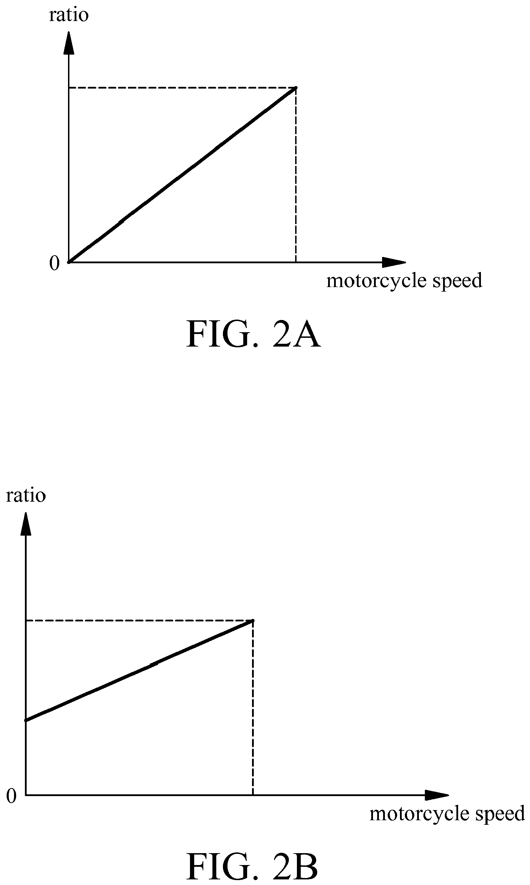

Referring to FIG. 1 through FIG. 3B, the present invention provides a variable linked braking system controlled by motorcycle speed, which comprises a brake master cylinder 1, a hydraulic pressure proportion variable valve 2, a front brake unit 3, a rear brake unit 4, a hydraulic pressure proportion controller 5, a motorcycle speed sensor 6, and a brake switch 8. The hydraulic pressure proportion variable valve 2, electronically or mechanically operated, is connected to the brake master cylinder 1 by an oil path 11 to distribute the hydraulic pressure generated from the brake master cylinder 1 on the front brake unit 3 and the rear brake unit 4. The front brake unit 3 is provided in the form of front brake calipers and connected to the hydraulic pressure proportion variable valve 2 by a first oil path 31. The rear brake unit 4 is provided in the form of rear brake calipers and connected to the hydraulic pressure proportion variable valve 2 by a second oil path 41. The hydraulic pressure proportion controller 5 has a computation processor (not shown), a servomotor (not shown) controlled by the computation processor, a memory (not shown) connected to the computation processor, and a power source (not shown). The hydraulic pressure proportion controller 5 uses the computation processor, or the computation processor and the servomotor, to control the hydraulic pressure proportion variable valve 2 so as to change the hydraulic pressure distribution proportion of the hydraulic pressure proportion variable valve 2. The motorcycle speed sensor 6 senses motorcycle speed by wheel speed or engine system rotation speed. The motorcycle speed sensor 6 senses a motorcycle speed 61, converts the motorcycle speed 61 into a speed signal, and sends the speed signal to the hydraulic pressure proportion controller 5. The brake switch 8 is provided in the form of a brake handle and adapted to start the brake master cylinder 1 and send a brake signal 81 to the hydraulic pressure proportion controller 5. The hydraulic pressure proportion controller 5 controls, according to the motorcycle speed 61, the hydraulic pressure proportion variable valve 2 to change the hydraulic pressure distribution proportion of the hydraulic pressure proportion variable valve 2, and in consequence the ratio of the braking force of the front brake unit 3 to the braking force of the rear brake unit 4 increases with the motorcycle speed 61 (which increases from 0km/h) to therefore either increase from 0 to less than 1, equal to 1, or larger than 1, or increase from 1. In addition to a linear relationship (shown in FIG. 2A through FIG. 2B), the relationship between the motorcycle speed 61 and the ratio is depicted with a curve so that the brake switch 8 generates the ratio of a hydraulic pressure distribution as soon as the brake switch 8 sends the brake signal 81 to the hydraulic pressure proportion controller 5, thereby allowing the hydraulic pressure proportion variable valve 2 to appropriately distribute the hydraulic pressure on the front brake unit 3 and the rear brake unit 4. For example, where the brake master cylinder 1 provides a total braking force of 10 units, with the brake switch 8 being the left brake handle, the front brake unit 3 being front brake calipers, and the rear brake unit 4 being rear brake calipers, the ratio increases with the motorcycle speed 61 to therefore increase from 0/10 to 3/7 when the motorcycle speed 61 increases from 0km/h to 30km/h, the ratio increases with the motorcycle speed 61 to therefore increase from 0/10 to 4/6 when the motorcycle speed 61 increases from 0km/h to 60km/h, the ratio increases with the motorcycle speed 61 to therefore increase from 0/10 to 5/5 when the motorcycle speed 61 increases from 0km/h to 90km/h, and the ratio increases with the motorcycle speed 61 to therefore increase from 0/10 to 6/4 when the motorcycle speed 61 increases from 0km/h to at least 90km/h. In another exemplary instance, where the brake master cylinder 1 provides a total braking force of 10 units, with the brake switch 8 being the right brake handle, the front brake unit 3 being front brake calipers, and the rear brake unit 4 being rear brake calipers, the ratio increases with the motorcycle speed 61 to therefore increase from 5/5 to 6/4 when the motorcycle speed 61 increases from 0km/h to 60km/h, wherein the ratio is 5/5 when the motorcycle speed 61 equals 30km/h, and thus the ratio remains unchanged when the motorcycle speed 61 increases from 0km/h to 30km/h, whereas the ratio increases with the motorcycle speed 61 to therefore increase from 5/5 to 7/3 when the motorcycle speed 61 increases from 0km/h to at least 90km/h, wherein the ratio is 5/5 when the motorcycle speed 61 equals 30km/h, and thus the ratio remains unchanged when the motorcycle speed 61 increases from 0km/h to 30km/h.

According to the present invention, the variable linked braking system controlled by motorcycle speed determines a ratio that matches the motorcycle speed 61 according to the linear or curve relationship between the motorcycle speed 61 and the ratio, so as to distribute the braking force on the front brake unit 3 and the rear brake unit 4 appropriately, thereby enhancing the stability of the motorcycle being braked.

Referring to FIG. 2A and FIG. 2B, the variable linked braking system controlled by motorcycle speed is characterized in that the ratio increases with the motorcycle speed 61 continuously.

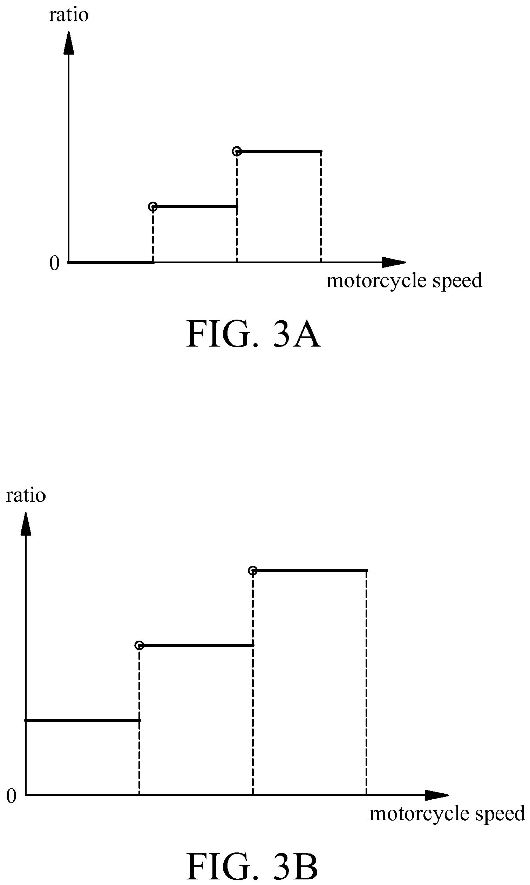

Referring to FIG. 3A and FIG. 3B, the variable linked braking system controlled by motorcycle speed is characterized in that the ratio increases with the motorcycle speed 61 stepwise.

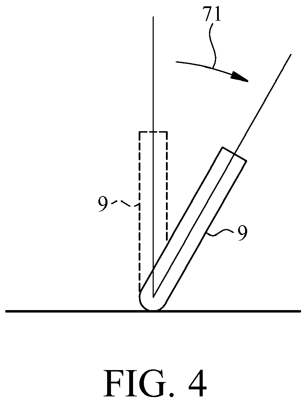

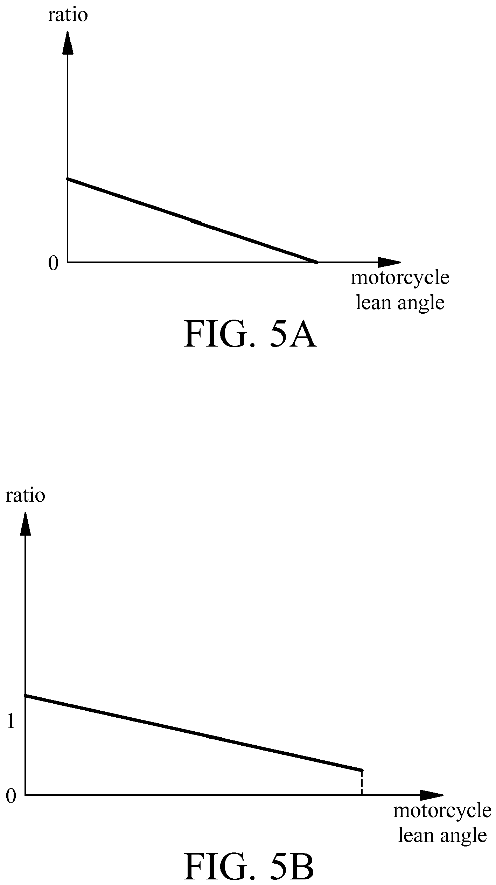

Referring to FIG. 1 and FIG. 4 through FIG. 6B, the variable linked braking system controlled by motorcycle speed further comprises a motorcycle lean angle sensor 7 which senses a motorcycle lean angle 71, converts the sensed motorcycle lean angle 71 into a lean angle signal, and sends the lean angle signal to the hydraulic pressure proportion controller 5. The motorcycle lean angle 71 is the angle by which the motorcycle 9 leans to one side. If the brake switch 8 starts the brake master cylinder 1 and sends the brake signal 81 to the hydraulic pressure proportion controller 5, the hydraulic pressure proportion controller 5 controls, according to the motorcycle lean angle 71, the hydraulic pressure proportion variable valve 2 to change the hydraulic pressure distribution proportion of the hydraulic pressure proportion variable valve 2, and in consequence the ratio decreases from the ratio corresponding to the motorcycle speed 61 to 0 or larger than 0, as the motorcycle lean angle 71 increases (from 0 degree). In addition to a linear relationship (shown in FIG. 5A through FIG. 5B), the relationship between the motorcycle lean angle 71 and the ratio is depicted with a curve so that the brake switch 8 generates the ratio of a hydraulic pressure distribution as soon as the brake switch 8 sends the brake signal 81 to the hydraulic pressure proportion controller 5, thereby allowing the hydraulic pressure proportion variable valve 2 to appropriately distribute the hydraulic pressure on the front brake unit 3 and the rear brake unit 4. For example, where the brake master cylinder 1 provides a total braking force of 10 units, with the brake switch 8 being the left brake handle, the front brake unit 3 being front brake calipers, and the rear brake unit 4 being rear brake calipers, the ratio decreases from the ratio corresponding to the motorcycle speed 61 to 2/8 when the motorcycle lean angle 71 increases from 0 degree to 10 degrees, the ratio decreases from the ratio corresponding to the motorcycle speed 61 to 1/9 when the motorcycle lean angle 71 increases from 0 degree to 20 degrees, and the ratio decreases from the ratio corresponding to the motorcycle speed 61 to 0/10 when the motorcycle lean angle 71 increases from 0 degree to 30 degrees. In another exemplary instance, where the brake master cylinder 1 provides a total braking force of 10 units, with the brake switch 8 being the right brake handle, the front brake unit 3 being front brake calipers, and the rear brake unit 4 being rear brake calipers, the ratio decreases from the ratio corresponding to the motorcycle speed 61 to 4/6 when the motorcycle lean angle 71 increases from 0 degree to 10 degrees, the ratio decreases from the ratio corresponding to the motorcycle speed 61 to 2/8 when the motorcycle lean angle 71 increases from 0 degree to 20 degrees, and the ratio decreases from the ratio corresponding to the motorcycle speed 61 to 1/9 when the motorcycle lean angle 71 increases from 0 degree to 30 degrees. Hence, according to the present invention, the variable linked braking system controlled by motorcycle speed not only distributes appropriately the braking force on the front brake unit 3 and the rear brake unit 4 according to the motorcycle speed 61, but also distributes appropriately the braking force on the front brake unit 3 and the rear brake unit 4 according to a ratio which matches a motorcycle lean angle 71 according to the linear or curve relationship between the motorcycle lean angle 71 and the ratio, thereby enhancing the stability of a motorcycle being braked.

Referring to FIG. 5A and FIG. 5B, the variable linked braking system controlled by motorcycle speed is characterized in that the ratio decreases continuously as the motorcycle lean angle 71 increases.

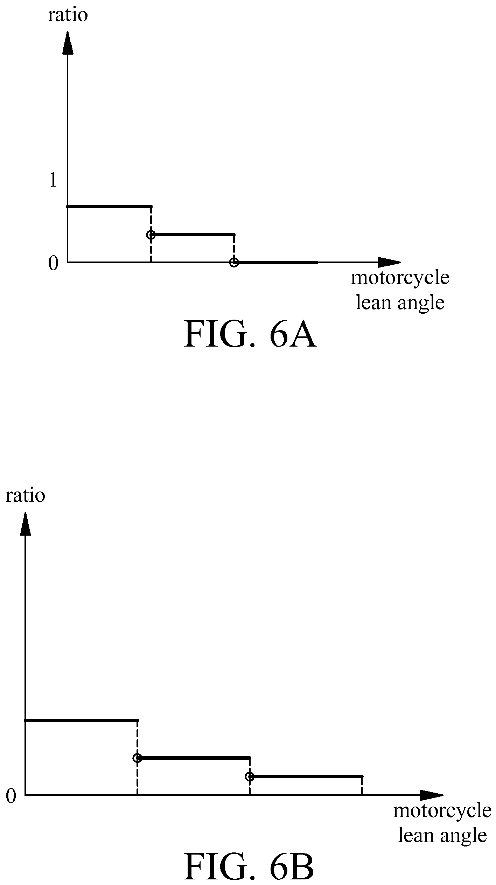

Referring to FIG. 6A and FIG. 6B, the variable linked braking system controlled by motorcycle speed is characterized in that the ratio decreases stepwise as the motorcycle lean angle 71 increases.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A variable linked braking system controlled by motorcycle speed, comprising:
a brake master cylinder;
a hydraulic pressure proportion variable valve connected to the brake master cylinder by an oil path;
a front brake unit connected to the hydraulic pressure proportion variable valve by a first oil path;
a rear brake unit connected to the hydraulic pressure proportion variable valve by a second oil path;
a hydraulic pressure proportion controller for controlling a hydraulic pressure distribution proportion of the hydraulic pressure proportion variable valve;
a motorcycle speed sensor for sensing a motorcycle speed, converting the sensed motorcycle speed into a speed signal, and sending the speed signal to the hydraulic pressure proportion controller; and
a brake switch for starting the brake master cylinder and sending a brake signal to the hydraulic pressure proportion controller to trigger the hydraulic pressure proportion controller to control a hydraulic pressure distribution proportion of the hydraulic pressure proportion variable valve, thereby allowing a ratio of a braking force of the front brake unit to a braking force of the rear brake unit to increase with the motorcycle speed.

2. The variable linked braking system controlled by motorcycle speed in accordance with claim 1, wherein the front brake unit is front brake calipers, and the rear brake unit is rear brake calipers.

3. The variable linked braking system controlled by motorcycle speed in accordance with claim 1, wherein the ratio increases with the motorcycle speed to less than 1, 1, or larger than 1.

4. The variable linked braking system controlled by motorcycle speed in accordance with claim 1, wherein the ratio increases with the motorcycle speed from 0/10 to 3/7 when the motorcycle speed increases from 0km/h to 30km/h, the ratio increases with the motorcycle speed to therefore increase from 0/10 to 4/6 when the motorcycle speed increases from 0km/h to 60km/h, the ratio increases with the motorcycle speed to therefore increase from 0/10 to 5/5 when the motorcycle speed increases from 0km/h to 90km/h, and the ratio increases with the motorcycle speed to therefore increase from 0/10 to 6/4 when the motorcycle speed increases from 0km/h to larger than 90km/h.

5. The variable linked braking system controlled by motorcycle speed in accordance with claim 1, wherein the ratio increases with the motorcycle speed to therefore increase from 5/5 to 6/4 when the motorcycle speed increases from 0km/h to 60km/h.

6. The variable linked braking system controlled by motorcycle speed in accordance with claim 5, wherein the ratio is 5/5 when the motorcycle speed equals 30km/h.

7. The variable linked braking system controlled by motorcycle speed in accordance with claim 1, wherein the ratio increases with the motorcycle speed to therefore increase from 5/5 to 7/3 when the motorcycle speed increases from 0km/h to at least 90km/h.

8. The variable linked braking system controlled by motorcycle speed in accordance with claim 7, wherein the ratio is 5/5 when the motorcycle speed equals 30km/h.

9. The variable linked braking system controlled by motorcycle speed in accordance with claim 1, wherein the ratio increases with the motorcycle speed continuously.

10. The variable linked braking system controlled by motorcycle speed in accordance with claim 1, wherein the ratio increases with the motorcycle speed stepwise.

11. The variable linked braking system controlled by motorcycle speed in accordance with claim 1, further comprising a motorcycle lean angle sensor for sensing a motorcycle lean angle, converting the sensed motorcycle lean angle into a lean angle signal, and sending the lean angle signal to the hydraulic pressure proportion controller, wherein the hydraulic pressure proportion controller controls a hydraulic pressure distribution proportion of the hydraulic pressure proportion variable valve when the brake switch starts the brake master cylinder and sends the brake signal to the hydraulic pressure proportion controller, and the ratio decreases from the ratio corresponding to the motorcycle speed as the motorcycle lean angle increases.

12. The variable linked braking system controlled by motorcycle speed in accordance with claim 11, wherein the ratio decreases from the ratio corresponding to the motorcycle speed to 0 or larger than 0 as the motorcycle lean angle increases.

13. The variable linked braking system controlled by motorcycle speed in accordance with claim 11, wherein the ratio decreases from the ratio corresponding to the motorcycle speed to one of 2/8 and 4/6 when the motorcycle lean angle increases from 0 degree to 10 degrees, the ratio decreases from the ratio corresponding to the motorcycle speed to one of 1/9 and 2/8 when the motorcycle lean angle increases from 0 degree to 20 degrees, and the ratio decreases from the ratio corresponding to the motorcycle speed to one of 0/10 and 1/9 when the motorcycle lean angle increases from 0 degree to 30 degrees.

14. The variable linked braking system controlled by motorcycle speed in accordance with claim 11, wherein the ratio decreases continuously from the ratio corresponding to the motorcycle speed as the motorcycle lean angle increases.

15. The variable linked braking system controlled by motorcycle speed in accordance with claim 11, wherein the ratio decreases stepwise from the ratio corresponding to the motorcycle speed as the motorcycle lean angle increases.
